# Europäisches Patentamt

# European Patent Office

## Office européen des brevets

(19)

(11) Veröffentlichungsnummer: **0 263 230 B1**

(12) ## EUROPÄISCHE PATENTSCHRIFT

(45) Veröffentlichungstag der Patentschrift:
**10.01.90**

(51) Int. Cl.⁴: **E 05 G 1/024**, B 22 F 7/04, B 22 F 3/10, B 23 K 35/32

(21) Anmeldenummer: **87101646.5**

(22) Anmeldetag: **06.02.87**

(54) **Wandelement für Sicherheitsaufbauten.**

(30) Priorität: **06.09.86 DE 3630429**

(43) Veröffentlichungstag der Anmeldung:
**13.04.88 Patentblatt 88/15**

(45) Bekanntmachung des Hinweises auf die Patenterteilung:
**10.01.90 Patentblatt 90/2**

(84) Benannte Vertragsstaaten:
**AT BE CH ES FR GB GR IT LI LU NL SE**

(56) Entgegenhaltungen:
**DE-A- 2 730 384**
**DE-A- 3 119 578**
**DE-B- 1 584 284**
**DE-C- 3 241 526**
**DE-U- 1 945 893**
**DE-U- 1 956 238**
**FR-A- 2 365 018**
**GB-A- 196 348**
**GB-A- 1 511 657**
**US-A- 3 645 216**
**US-A- 3 898 729**

(73) Patentinhaber: **METALLGESELLSCHAFT AG,
Reuterweg 14 Postfach 3724, D-6000 Frankfurt/M.1 (DE)**
Patentinhaber: **Bode-Panzer AG, Entenfangweg 7,
D-3000 Hannover 21 (DE)**

(72) Erfinder: **Reimann, Hartwig, Dr. Dipl.-Ing, Im Brühl 16,
D-6237 Kelkheim-Liederbach (DE)**
Erfinder: **Kruske, Gerhard (Ing. grad.),
Urselbachstrasse 73 A, D-6370 Oberursel 5 (DE)**
Erfinder: **Maxeiner, Max,
Graf-Folke-Bernadotte-Strasse 13,
D-6078 Neu-Isenburg (DE)**

(74) Vertreter: **Leine, Sigurd, Dipl.-Ing. et al, LEINE & KÖNIG
Patentanwälte Burckhardtstrasse 1,
D-3000 Hannover 1 (DE)**

## Beschreibung

Die Erfindung betrifft ein Wandelement für Sicherheitsaufbauten, insbesondere für den Bau von Tresoren, aus zwei parallel zueinander angeordneten Stahlblechen und einer zwischen diesen befindlichen Bewehrungsschicht aus Hartstoffkörnern, deren Zwischenräume mit die Hartstoffkörner miteinander verbindender und mit den Stahlblechen stoffschlüssig verbundener Hartlotmasse ausgefüllt sind.

Derartige Wandelemente müssen nicht nur eine ausreichende Sicherheit gegenüber umformenden, z. B. durch Zertrümmern, und trennenden, z. B. durch Schneidbrennen und Bohren, Angriffen, sondern auch ein möglichst geringes Eigengewicht besitzen, um die Transportprobleme und die statische Belastung beim Einbau in Gebäuden so klein wie möglich zu halten.

In der DE-AS 15 84 284 ist eine Panzerplatte vorgesehen, die aus einer Stahlumkleidung und einer darin angeordneten Füllung aus dichtgepackten, unregelmässig geformten Körnern aus abriebfestem Material, dessen Zwischenräume mit einer Hartlotmasse ausgefüllt sind, besteht. Als abriebfestes Material werden Titancarbid, Zirkoncarbid, Hafniumcarbid, Vanadiumcarbid, Niobcarbid, Tantalcarbid, Chromcarbid, Molybdäncarbid, Thoriumcarbid, Urancarbid, Plutoniumcarbid oder Wolframcarbid eingesetzt, wobei als Hartlotmasse, die mit der Stahlumkleidung stoffschlüssig verbunden ist, Nickelbronze verwendet wird. Diese Panzerplatte hat keinen Eingang in die Praxis finden können, weil sie keine ausreichende Sicherheit gegenüber thermischem Angriff bietet. Bekannt ist auch eine gegen trennende Angriffe durch Trennscheiben oder Kronenbohrer sichere Panzerplatte aus der DE-OS 31 19 578, die aus mittels Stahl- oder Eisendrähten bewehrten Hartgussplatten und einer darauf befindlichen Schicht von im Hartguss eingebetteten Borcarbidstücken besteht, gegenüber thermischen Angriffen aber nicht sicher ist. Schliesslich ist noch auf die aus der DE-OS 27 30 384 bekannte Panzerplatte hinzuweisen, deren äusserer Schicht aus austenitischem Stahl sich eine Isolierschicht aus Asbest, Fasermatte oder Keramikfaserplatte, eine platten- oder tafelförmige Schicht aus Metall-Keramik-Werkstoff, eine Dämmschicht aus Kunststoff, Kork oder Keramikfasern, eine Elastomerschicht, in die kleine Elemente aus Aluminiumoxid oder Borcarbid eingebettet sind, eine Klebeschicht, die die Elastomerschicht mit der nachfolgenden plattenförmigen Schicht aus Aluminium oder glasfaserverstärktem Kunststoff verbindet, und eine Gitterstrukturschicht aus Spezialprofilstahl anschliessen. Abgesehen davon, dass die Herstellung einer derartigen Panzerplatte mit einem beachtlichen Aufwand verbunden ist, entspricht ihre Wanddicke mit 130 mm, wie im Ausführungsbeispiel angegeben, nicht den Forderungen, die Wanddicke so klein wie möglich zu halten.

Es ist die Aufgabe der vorliegenden Erfindung, das Wandelement der eingangs beschriebenen Konstruktion so auszubilden, dass ein Kompromiss zwischen ausreichender Sicherheit gegenüber umformenden und allen trennenden Angriffen bei gleichzeitig möglichst kleinem Eigengewicht und kleiner Wanddicke erzielt wird.

Gelöst ist diese Aufgabe erfindungsgemäss dadurch, dass die Bewehrungsschicht zu 30 bis 70 Vol.% aus nicht-metallischem Hartstoff, Rest Hartlotmasse, gebildet ist.

Im Rahmen der vorzugsweisen Ausgestaltung des Wandelements besteht die Bewehrungsschicht zu 30 bis 50 Vol.% aus Hartstoff, Rest Hartlotmasse.

Im Hinblick auf eine optimale Sicherheit ist es angebracht, wenn der nicht-metallische Hartstoff teilweise durch metallischen Hartstoff, vorzugsweise im Verhältnis von 2 bis 4 Teilen nicht-metallischen auf einen Teil metallischen Hartstoff, ersetzt ist.

Die Bewehrungsschicht enthält mindestens einen der metallischen Hartstoffe wie Hartguss, Carbide, Boride, Silizide usw. und mindestens einen der nicht-metallischen Hartstoffe wie Oxide, Carbide, Keramik, Mineralien.

Die nicht-metallischen Hartstoffe besitzen eine Korngrösse von 5 bis 20 mm, vorzugsweise 5 bis 12 mm, und die metallischen Hartstoffe eine Korngrösse von 1 bis 6, vorzugsweise 2 bis 5 mm.

Um eine stoffschlüssige Verbindung zwischen der Hartlotmasse und den Stahlblechen sowie den metallischen Hartstoffen zu gewährleisten und die nicht-metallischen Hartstoffe fest in die Hartlotmasse einzubinden, haben sich Hartlote auf Kupfer- und Nickelbasis, die einzeln oder als Gemisch aus wenigstens einem Kupferbasislot mit einem Nickelbasislot eingesetzt werden, als besonders geeignet erwiesen. Die Kupferbasislote umfassen CuZn-, CuNiZn-, CuP-, Cu- und CuSn-Lote. Die Nickelbasislote setzen sich aus NiCrSi-, NiBSi-, NiCrSiB-, NiCrP-, NiP- und NiMnSi-Legierungen zusammen. Die genaue Zusammensetzung dieser Hartlote ist in DIN 8513 beschrieben.

Wenn im Rahmen der weiteren Ausgestaltung der Erfindung in der Bewehrungsschicht eine Zwischenschicht von 0,5 bis 7,0 mm Dicke aus einem höchstschmelzenden und elektrisch nicht leitenden Werkstoff, wie z. B. Asbest, Graphit und/oder keramischen Werkstoffen, angeordnet ist, kann das Bauelement nicht durch Lichtbogenschweissen angegriffen werden, da sich kein Lichtbogen ausbilden kann.

Es besteht weiterhin die Möglichkeit, in die Bewehrungsschicht wenigstens eine Stahlfolie von 2,0 bis 8,0 mm Dicke einzufügen und stoffschlüssig mit der Hartlotmasse zu verbinden, um einen erhöhten Widerstand gegenüber mechanischen Trennangriffen zu erzielen.

Zur Herstellung planparalleler Bauelemente und zur Erzielung einer armierenden Wirkung ist es angebracht, in der Bewehrungsschicht Abstandhalter anzuordnen.

Diese sind, wenn sie aus Metall bestehen, mit den Stahlblechen, ggf. mit der Stahlfolie, durch die Hartlotmasse und/oder durch Schweissen stoffschlüssig verbunden.

Als Abstandhalter dienen spitz-, trapez-, sägen-oder rundgewindeförmig gestaltete Streifen, Platten oder Bänder, die im Bereich ihrer Profilspitzen mit den Stahlblechen, ggf. Stahlfolie, stoffschlüssig verbunden sind.

Als Abstandhalter können auch aus metallischem oder keramischem Werkstoff bestehende Bolzen in der Bewehrungsschicht angeordnet sein.

Zur Herstellung der erfindungsgemäss gestalteten Wandelemente wird das Gemisch aus Hartstoffkörnern und Hartlotpulver auf das eine Stahlblech aufgetragen, das andere Stahlblech auf das Gemisch gelegt, das Paket bei einer Temperatur von 600 bis 900° C in nicht oxidierender Atmosphäre 10 bis 30 min lang vorgewärmt, dann auf Schmelztemperatur des Hartlotes in nicht oxidierender Atmosphäre erhitzt und bei dieser Temperatur 10 bis 30 min lang gehalten, um eine feste stoffschlüssige Verbindung zwischen der Hartlotmasse und den Stahlblechen bzw. den metallischen Hartstoffkörnern und eine gute Einbindung der nicht-metallischen Hartstoffkörner zu erzielen.

Eine andere Möglichkeit der Herstellung der Wandelemente besteht darin, dass ein Gemisch aus Hartstoffkörnern und Hartlotpulver in eine Form geschichtet, darin auf Schmelztemperatur des Hartlotes in nicht oxidierender Atmosphäre erhitzt, bei dieser Temperatur 10 bis 30 min gehalten, nach dem Abkühlen die entstandene Bewehrungsschicht unter Zwischenfügen einer Hartlotpulverschicht von 0,5 bis 2,0 mm Dicke auf das eine Stahlblech aufgelegt, eine Hartlotpulverschicht von 0,5 bis 2,0 mm Dicke auf die Oberseite der Bewehrungsschicht aufgetragen, das andere Stahlblech darauf gelegt, das Paket bei einer Temperatur von 600 bis 900° C 10 bis 30 min lang in nicht oxidierender Atmosphäre vorgewärmt, dann auf Schmelztemperatur des Hartlotes in nicht oxidierender Atmosphäre erhitzt und bei dieser Temperatur 10 bis 30 min lang gehalten wird.

Gemäss einem Ausführungsbeispiel wurde zwischen die im Abstand von 15 mm angeordneten, aus austenitischem Stahl bestehenden Bleche von jeweils 4 mm Dicke ein Gemisch aus 27 Vol.% Aluminiumoxid, 8 Vol.% Wolframcarbid, 35 Vol.% Kupfer und 30 Vol.% NiCrBSi-Lot eingefüllt und das so vorbereitete Paket auf 1100° C erhitzt und bei dieser Temperatur 15 min lang gehalten. Nach dem Abkühlen auf Raumtemperatur ergab sich eine sehr feste stoffschlüssige Verbindung zwischen dem Hartlot und den Stahlblechen bzw. den Hartstoffen.

Um Wärmespannungen in dem Wandelement zu vermeiden, ist es angebracht, wenn das vorbereitete Paket zunächst auf eine Temperatur von ca. 800° C vorgewärmt und bei dieser Temperatur einige Zeit gehalten wird.

Die Erfindung ist in den Zeichnungen beispielhaft dargestellt und wird im folgenden näher erläutert:

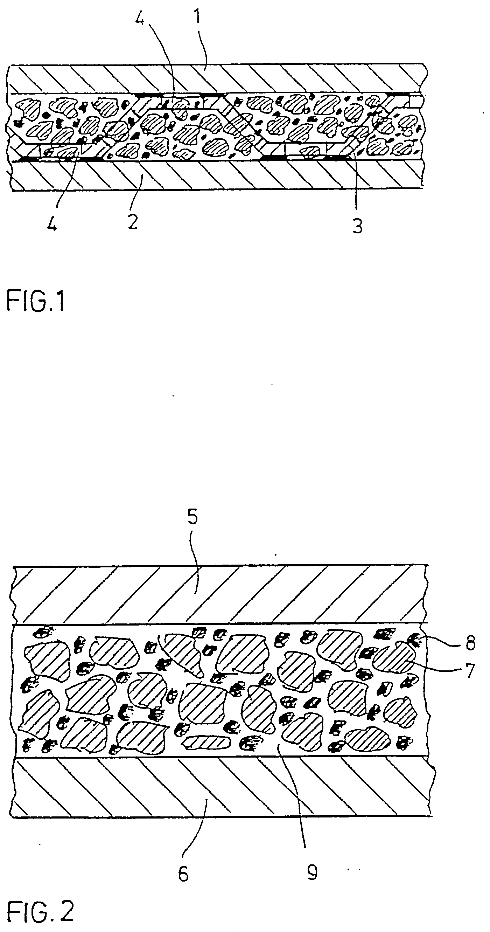

Fig. 1 zeigt einen Querschnitt durch ein Wandelement, bei dem zwischen den beiden im Abstand von 15 mm angeordneten Stahlblechen (1, 2) von jeweils 5 mm Dicke ein trapezgewindeförmiger, aus Stahlband bestehender Abstandhalter (3) eingefügt ist, der im Bereich seiner Profilspitzen und Flanken mit Durchbrechungen (4) versehen ist, durch die das schmelzflüssige Hartlot hindurchtreten kann. Im Bereich der Profilspitzen ist der Abstandhalter mit den Stahlblechen stoffschlüssig durch Hartlotmasse verbunden.

In Fig. 2 ist zwischen den beiden Stahlblechen (5, 6) ein Gemisch aus 12 Vol.% Hartguss (7), 30 Vol.% Keramik (8), 30 Vol.% Kupfer-Lot und 28 Vol.% Hartlot (9) aus einer NiCrBSi-Legierung angebracht. Die Hartlotmasse bildet mit den metallischen Hartstoffen und den Stahlblechen einen stoffschlüssigen Verbund und hüllt die nicht-metallischen Hartstoffkörner vollständig ein.

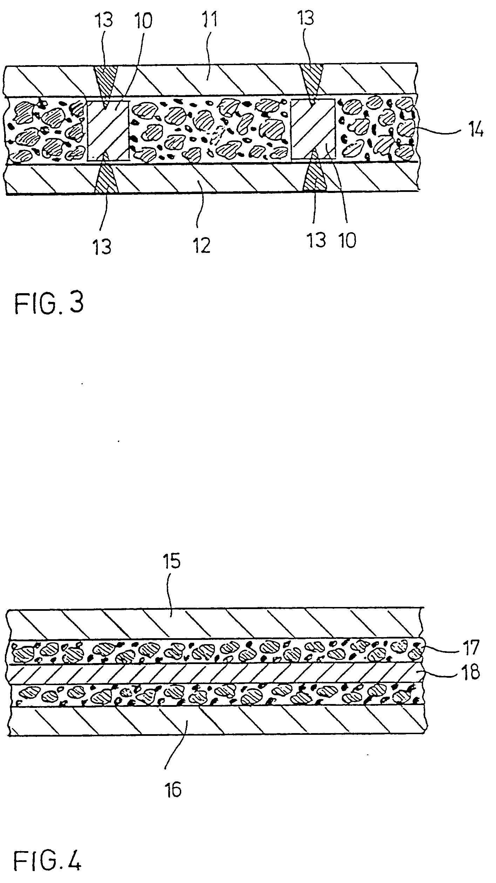

In Fig. 3 ist ein Wandelement dargestellt, bei dem metallische bolzenförmige Abstandhalter (10) mit den Stahlblechen (11, 12) durch Punktschweissung (13) verbunden sind. Die Bewehrungsschicht (14) besteht aus einem Gemisch von 30 Vol.% Aluminiumoxid, 15 Vol.% Hartguss, 10 Vol.% Wolframcarbid, 30 Vol.% CuNiZn-Lot und 15 Vol.% NiBSi-Lot. Die Hartlotmasse bildet einen stoffschlüssigen Verbund mit den Stahlblechen, den metallischen Hartstoffkörnern, den Abstandhaltern und schliesst die nicht-metallischen Hartstoffkörner ein.

In Fig. 4 ist in der zwischen den beiden Stahlblechen (15, 16) befindlichen Bewehrungsschicht (17) ein Stahlblech (18) angebracht. Die Bewehrungsschicht (17) besteht aus 25 Vol.% Aluminiumoxid, 10 Vol.% Wolframcarbid, 15 Vol.% NiCrBSi-Lot und 40 Vol.% Kupfer-Lot.

Die mit der Erfindung erzielten Vorteile bestehen insbesondere darin, dass das Wandelement sicher gegenüber dem Angriff durch Schneidbrenner, Trennscheiben, Bohrer und gegen Zertrümmern ist. Die Hartstoffe setzen den Trennscheiben bzw. Bohrern einen erheblichen Widerstand entgegen. Durch den Anteil an nicht-metallischen Hartstoffen ergibt sich insbesondere eine Beständigkeit gegenüber Brennschneidangriffen. Ein besonderer Vorzug liegt darin, dass das erfindungsgemäss gestaltete Wandelement vergleichsweise dünnwandig, d. h. mit einer Dicke von 20 bis 50 mm problemlos herstellbar ist.

## Patentansprüche

1. Wandelement für Sicherheitsaufbauten, insbesondere für den Bau von Tresoren, aus zwei parallel zueinander angeordneten Stahlplatten und einer zwischen diesen befindlichen Bewehrungsschicht aus Hartstoffkörnern, deren Zwischenräume mit die Hartstoffkörner miteinander verbindender und mit den Stahlblechen stoffschlüssig verbundener Hartlotmasse ausgefüllt sind, dadurch gekennzeichnet, dass die Bewehrungsschicht zu 30 bis 70 Vol.% aus nicht-metallischem Hartstoff, Rest Hartlotmasse, gebildet ist.

2. Wandelement nach Anspruch 1, dadurch gekennzeichnet, dass die Bewehrungsschicht zu 30 bis 50 Vol.% aus nicht-metallischem Hartstoff, Rest Hartlotmasse, besteht.

3. Wandelement nach den Ansprüchen 1 und/ oder 2, dadurch gekennzeichnet, dass der nicht-metallische Hartstoff teilweise durch metallischen Hartstoff, vorzugsweise im Verhältnis von 2 bis 4 Teilen nicht-metallischen auf einen Teil metallischen Hartstoff, ersetzt ist.

4. Wandelement nach den Ansprüchen 1 bis 3, dadurch gekennzeichnet, dass die Bewehrungsschicht mindestens einen der metallischen Hartstoffe wie Hartguss, Carbide, Boride, Silizide usw. und mindestens einen der nicht-metallischen Hartstoffe wie Oxide, Carbide, Keramik, Mineralien usw. enthält.

5. Wandelement nach den Ansprüchen 1 bis 4, dadurch gekennzeichnet, dass die nicht-metallischen Hartstoffe eine Korngrösse von 5 bis 20 mm, vorzugsweise 5 bis 12 mm, und die metallischen Hartstoffe eine Korngrösse von 1 bis 6, vorzugsweise 3 bis 5 mm besitzen.

6. Wandelement nach den Ansprüchen 1 bis 5, dadurch gekennzeichnet, dass die Hartlotmasse der Bewehrungsschicht aus wenigstens einem der Kupfer- oder Nickelbasislote gemäss DIN 8513 besteht.

7. Wandelement nach den Ansprüchen 1 bis 6, dadurch gekennzeichnet, dass die Hartlotmasse der Bewehrungsschicht aus einem Gemisch von wenigstens einem Kupfer- und einem Nickelbasislot gemäss DIN 8513 besteht.

8. Wandelement nach den Ansprüchen 1 bis 7, dadurch gekennzeichnet, dass in der Bewehrungsschicht eine aus einem höchstschmelzenden und elektrisch nicht leitenden Werkstoff bestehende Zwischenschicht von 0,5 bis 7,0 mm Dicke angeordnet ist.

9. Wandelement nach Anspruch 8, dadurch gekennzeichnet, dass die Zwischenschicht aus Asbest, Graphit und/oder einem keramischen Werkstoff besteht.

10. Wandelement nach den Ansprüchen 1 bis 9, dadurch gekennzeichnet, dass in der Bewehrungsschicht wenigstens eine Stahlfolie von 2,0 bis 8,0 mm Dicke angeordnet ist.

11. Wandelement nach den Ansprüchen 1 bis 10, dadurch gekennzeichnet, dass in der Bewehrungsschicht Abstandhalter angeordnet sind.

12. Wandelement nach den Ansprüchen 1 bis 11, dadurch gekennzeichnet, dass metallische Abstandhalter stoffschlüssig durch die Hartlotmasse und/oder durch Schweissung mit den Stahlblechen, ggf. mit der Stahlfolie, verbunden sind.

13. Wandelement nach den Ansprüchen 1 bis 12, dadurch gekennzeichnet, dass die Abstandhalter aus spitz-, trapez-, sägen- oder rundgewindeförmig gestalteten Bändern, Platten oder Streifen bestehen und im Bereich ihrer Profilspitzen mit den Stahlblechen, ggf. mit der Stahlfolie, stoffschlüssig verbunden sind.

14. Wandelement nach den Ansprüchen 1 bis 11, dadurch gekennzeichnet, dass die Abstandhalter aus Bolzen bestehen.

15. Verfahren zur Herstellung des Wandelements nach den Ansprüchen 1 bis 14, dadurch gekennzeichnet, dass ein Gemisch aus Hartstoffkörnern und Hartlotpulver auf das eine Stahlblech aufgetragen, das andere Stahlblech auf das Gemisch gelegt, das Paket bei einer Temperatur von 600 bis 900° C 10 bis 30 min lang in nicht oxidierender Atmosphäre vorgewärmt, dann auf Schmelztemperatur des Hartlotes in nicht oxidierender Atmosphäre erhitzt und bei dieser Temperatur 10 bis 30 min lang gehalten wird.

16. Verfahren zur Herstellung des Wandelements nach den Ansprüchen 1 bis 14, dadurch gekennzeichnet, dass ein Gemisch aus Hartstoffkörnern und Hartlotpulver in eine Form geschichtet, darin auf Schmelztemperatur des Hartlotes in nicht oxidierender Atmosphäre erhitzt, bei dieser Temperatur 10 bis 30 min gehalten, nach dem Abkühlen die Bewehrungsschicht unter Zwischenfügen einer Hartlotpulverschicht von 0,5 bis 2,0 mm Dicke auf das eine Stahlblech aufgelegt, eine Hartlotpulverschicht von 0,5 bis 2,0 mm Dicke auf die Oberseite der Bewehrungsschicht aufgetragen, das andere Stahlblech darauf gelegt, das Paket bei einer Temperatur von 600 bis 900° C 10 bis 30 min lang in nicht oxidierender Atmosphäre vorgewärmt, dann auf Schmelztemperatur des Hartlotes in nicht oxidierender Atmosphäre erhitzt und bei dieser Temperatur 10 bis 30 min lang gehalten wird.

## Claims

1. Wall element for security constructions, more especially for the construction of safes, comprising two steel plates arranged parallel to one another, and a reinforcing layer of granules of hard material disposed between the said plates, the interstices of which are filled with hard solder composition connecting the granules of the hard material to one another and integrally connected to the steel plates, characterised in that the reinforcing layer is formed to 30 to 70% by volume of non-metallic hard material, the remainder being hard solder composition.

2. Wall element according to claim 1, characterised in that the reinforcing layer consists of 30 to 50% by volume of non-metallic hard material, the remainder being hard solder composition.

3. Wall element according to claims 1 and/or 2, characterised in that the non-metallic hard material is partially replaced by metallic hard material, advantageously in the ratio of 2 to 4 parts of non-metallic hard material to one part of metallic hard material.

4. Wall element according to claims 1 to 3, characterised in that the reinforcing layer contains at least one of the metallic hard materials, such as chilled cast iron, carbides, borides, silicides, etc., and at least one of the non-metallic hard materials, such as oxides, carbides, ceramics, minerals, etc.

5. Wall element according to claims 1 to 4, characterised in that the non-metallic hard materials have a grain size from 5 to 20 mm., advantageously 5 to 12 mm., and the metallic hard materials have a grain size from 1 to 6 mm., advantageously 3 to 5 mm.

6. Wall element according to claims 1 to 5, characterised in that the hard solder composition of the reinforcing layer consists of at least one of the copper- or nickel-based solders according to DIN 8513.

7. Wall element according to claims 1 to 6, characterised in that the hard solder composition of the reinforcing layer consists of a mixture of at least one copper-based and one nickel-based solder according to DIN 8513.

8. Wall element according to claims 1 to 7, characterised in that the reinforcing layer has arranged therein an intermediate layer consisting of electrically non-conducting material of extremely high melting point and having a thickness from 0.5 to 7.0 mm.

9. Wall element according to claim 8, characterised in that the intermediate layer consists of asbestos, graphite and/or a ceramic material.

10. Wall element according to claims 1 to 9, characterised in that at least one steel foil with a thickness of 2.0 to 8.0 mm. is arranged in the reinforcing layer.

11. Wall element according to claims 1 to 10, characterised in that spacer members are arranged in the reinforcing layer.

12. Wall element according to claims 1 to 11, characterised in that metallic spacer members are integrally connected by the hard solder composition and/or by welding with the steel sheets or plates, possibly with the steel foil.

13. Wall element according to claims 1 to 12, characterised in that the spacer members consist of bands, plates or strips having a pointed, trapezoidal, saw-toothed or round-threaded formation and are integrally connected in the region of their profile tips with the steel sheets or plates, possibly with the steel foil.

14. Wall element according to claims 1 to 11, characterised in that the spacer members consist of bolts.

15. Method or producing the wall element according to claims 1 to 14, characterised in that a mixture of granules of hard material and hard solder powder are applied to the one steel plate, the other steel plate is laid on the mixture, the assembly is pre-heated at a temperature from 600 to 900° for 10 to 30 minutes in non-oxidising atmosphere, then heated to melting temperature of the hard solder in non-oxidising atmosphere and maintained at this temperature for 10 to 30 minutes.

16. Method of producing the wall element according to claims 1 to 14, characterised in that a mixture of hard material granules and hard solder powder are arranged in layers in a mould, heated therein to melting temperature of the hard solder in non-oxidising atmosphere, kept at this temperature for 10 to 30 minutes and, after cooling, the reinforcing layer, with interposition of a layer of hard solder powder with a thickness of 0.5 to 2.0 mm. is applied to the one steel plate, a layer of hard solder powder in a thickness of 0.5 to 2.0 mm is applied to the top surface of the reinforcing layer, the other steel plate or sheet is laid thereon, the assembly is heated for 10 to 30 minutes at a temperature from 600 to 900° C in non-oxidising atmosphere, then heated to melting temperature of the hard solder in non-oxidising atmosphere and maintained at this temperature for 10 to 30 minutes.

## Revendications

1. Elément de paroi pour constructions de sécurité, en particulier pour la construction de coffres-forts, constitué de deux plaques d'acier disposées parallèles l'une à l'autre et d'une couche d'armature en grains de matériau dur se trouvant entre celles-ci, dont les interstices sont remplis d'une masse de métal d'apport dur qui relie les grains de matériau dur entre eux et est reliée à blocage de matière aux tôles d'acier, caractérisé en ce que la couche d'armature est formée de 30 à 70% en volume de matériau dur non métallique, le reste étant une masse de métal d'apport dur.

2. Elément de paroi selon la revendication 1, caractérisé en ce que la couche d'armature est constituée de 30 à 50% en volume de matériau dur non métallique, le reste étant une masse de métal d'apport dur.

3. Elément de paroi selon les revendications 1 et/ou 2, caractérisé en ce que le matériau dur non métallique est remplacé partiellement par un matériau dur métallique, avantageusement en proportion de 2 à 4 parties de matériau dur non métallique à une partie de matériau dur métallique.

4. Elément de paroi selon l'une des revendications 1 à 3, caractérisé en ce que la couche d'armature contient au moins un des matériaux durs métalliques tels que fonte trempée, carbures, borures, siliciures, etc., et au moins un des matériaux durs non métalliques tels qu'oxydes, carbures, céramiques, minéraux, etc.

5. Elément de paroi selon l'une des revendications 1 à 4, caractérisé en ce que les matériaux durs non métalliques possèdent une grosseur de grains de 5 à 20 mm, avantageusement de 5 à 12 mm, et les matériaux durs métalliques une grosseur de grains de 1 à 6, avantageusement de 3 à 5 mm.

6. Elément de paroi selon l'une des revendications 1 à 5, caractérisé en ce que la masse de métal d'apport dur de la couche d'armature est constituée d'au moins un des métaux d'apport à base de cuivre ou de nickel selon DIN 8513.

7. Elément de paroi selon l'une des revendications 1 à 6, caractérisé en ce que la masse de métal d'apport dur de la couche d'armature est constituée d'un mélange d'au moins un métal d'apport à base de cuivre et un à base de nickel selon DIN 8513.

8. Elément de paroi selon l'une des revendications 1 à 7, caractérisé en ce qu'une couche intermédiaire de 0,5 à 7,0 mm d'épaisseur, constituée d'un matériau à point de fusion élevé et non conducteur électriquement, est disposée dans la couche d'armature.

9. Elément de paroi selon l'une des revendications 1 à 8, caractérisé en ce que la couche intermédiaire est constituée d'amiante, de graphite et/ou d'un matériau céramique.

10. Elément de paroi selon l'une des revendications 1 à 9, caractérisé en ce qu'au moins une feuille d'acier de 2,0 à 8,0 mm d'épaisseur est disposée dans la couche d'armature.

11. Elément de paroi selon l'une des revendications 1 à 10, caractérisé en ce que des écarteurs sont disposés dans la couche d'armature.

12. Elément de paroi selon l'une des revendications 1 à 11, caractérisé en ce que des écarteurs métalliques sont reliés à blocage de matière par la masse de métal d'apport dur et/ou par soudure aux tôles d'acier, le cas échéant aux feuilles d'acier.

13. Elément de paroi selon l'une des revendications 1 à 12, caractérisé en ce que les écarteurs sont constitués de rubans, de plaques ou de bandes conformés en forme pointue, trapézoïdale, de dents de scie ou de filetage rond, et sont reliés à blocage de matière dans la région de leurs pointes profilées, aux tôles d'acier, le cas échéant aux feuilles d'acier.

14. Elément de paroi selon l'une des revendications 1 à 11, caractérisé en ce que les écarteurs sont constitués par des boulons.

15. Procédé de fabrication de l'élément de paroi selon les revendications 1 à 14, caractérisé en ce qu'on applique un mélange de grains de matériau dur et de poudre de matériau d'apport dur sur l'une des tôles d'acier, on pose l'autre tôle d'acier sur le mélange, on préchauffe l'empilage à une température de 600 à 900° C pendant 10 à 30 min dans une atmosphère non oxydante, on le chauffe ensuite à la température de fusion du métal d'apport dur dans une atmosphère non oxydante, et on le maintient à cette température pendant 10 à 30 min.

16. Procédé de fabrication de l'élément de paroi selon les revendications 1 à 14, caractérisé en ce qu'on dispose par couches, dans un moule, un mélange de grains de matériau dur et de poudre de matériau d'apport dur, on le chauffe dedans à la température de fusion du matériau d'apport dur dans une atmosphère non oxydante, on le maintient à cette température pendant 10 à 30 min, on dépose la couche d'armature, après refroidissement, sur une tôle d'acier avec interposition d'une couche de poudre de matériau d'apport dur de 0,5 à 2,0 mm d'épaisseur, on pose l'autre tôle d'acier dessus, on préchauffe l'empilage à une température de 600 à 900° C pendant 10 à 30 min dans une atmosphère non oxydante, on le chauffe ensuite à la température de fusion du métal d'apport dur dans une atmosphère non oxydante, et on le maintient à cette température pendant 10 à 30 min.

FIG.1

FIG.2

FIG. 3

FIG. 4